(19) Europäisches Patentamt
European Patent Office
Office européen des brevets

(11) EP 0 709 442 B1

(12) **EUROPÄISCHE PATENTSCHRIFT**

(45) Veröffentlichungstag und Bekanntmachung des Hinweises auf die Patenterteilung:
**13.02.2002 Patentblatt 2002/07**

(51) Int Cl.[7]: **C09D 169/00**, C09D 1/00, C08K 5/132, C08L 69/00, B29C 47/04

(21) Anmeldenummer: **95116335.1**

(22) Anmeldetag: **17.10.1995**

(54) **UV-geschützte, beschichtete Polycarbonatformkörper**

UV-protected coated polycarbonate moulded articles

Objets moulés à base de polycarbonates, revêtus et protégés contre le rayonnement UV

(84) Benannte Vertragsstaaten:
**BE DE FR GB IT NL**

(30) Priorität: **28.10.1994 DE 4438543**

(43) Veröffentlichungstag der Anmeldung:
**01.05.1996 Patentblatt 1996/18**

(73) Patentinhaber: **BAYER AG**
**51368 Leverkusen (DE)**

(72) Erfinder:
- **Scholl, Thomas, Dr.**
  **D-51469 Bergisch Gladbach (DE)**
- **Bier, Peter, Dr.**
  **D-47800 Krefeld (DE)**
- **Nising, Wolfgang, Dr.**
  **D-53757 Sankt Augustin (DE)**

(56) Entgegenhaltungen:
**EP-A- 0 110 221**
**EP-A- 0 149 182**
**DE-A- 1 593 750**
**US-A- 5 306 456**

EP 0 709 442 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Gegenstand der vorliegenden Erfindung sind beschichtete Formkörper aus thermoplastischen, aromatischen Polycarbonaten, die dadurch gekennzeichnet sind, daß die Beschichtung (A) selbst aus einem thermoplastischen, aromatischen Polycarbonat mit einer Dicke von 1 µm bis 200 µm, vorzugsweise von 1 µm bis 50 µm besteht, welches 4 Gew.-% bis 20 Gew.-%, vorzugsweise 5 Gew.-% bis 15 Gew.-% einer Verbindung der Formel (I) enthält,

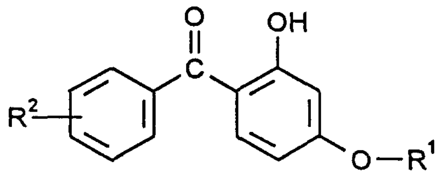

(I)

worin $R^1$ $C_{18}$-$C_{30}$-Alkyl und $R^2$ H oder $C_1$-$C_{12}$-Alkyl sind.

Gegenstand der vorliegenden Erfindung ist außerdem ein Verfahren zur Herstellung der beschichteten Formkörper, das dadurch gekennzeichnet ist, daß man Formkörper und Beschichtung (A) gemeinsam durch Coextrusion herstellt.

Auf die Beschichtung (A) kann gegebenenfalls eine weitere Beschichtung (B) aufgebracht sein, die aus Kieselsäure, einem anderen Metalloxid oder einer Mischung aus beidem besteht und eine Dicke von 0,01 µm bis 20 µm, vorzugsweise von 0,01 µm bis 5 µm und insbesondere von 0,01 µm bis 1 µm hat.

Gegenstand der vorliegenden Erfindung sind somit auch beschichtete Formkörper aus thermoplastischen, aromatischen Polycarbonaten, die dadurch gekennzeichnet sind, daß sie eine Beschichtung (A) aus einem thermoplastischen, aromatischen Polycarbonat mit einer Dicke von 1 µm bis 200 µm, vorzugsweise von 1 µm bis 50 µm enthalten, welche 4 Gew.-% bis 20 Gew.-%, vorzugsweise 5 Gew.-% bis 15 Gew.-% einer Verbindung der Formel (I) enthalten,

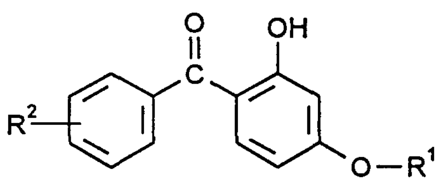

(I)

worin $R^1$ $C_{18}$-$C_{30}$-Alkyl und $R^2$ H oder $C_1$-$C_{12}$-Alkyl sind,
und auf dieser Beschichtung (A) noch eine zweite Beschichtung (B) aus Kieselsäure, einem anderen Metalloxid oder einer Mischung aus beidem hat mit einer Dicke von 0,01 µm bis 20 µm, vorzugsweise von 0,01 µm bis 5 µm und insbesondere von 0,01 µm bis 1 µm hat.

Die Beschichtung (B) wird auf die Schicht (A) des erfindungsgemäß beschichteten Polycarbonatformkörpers aufgebracht, indem man kolloidale Lösungen der Kieselsäure oder von anderen Metalloxiden oder von einer Mischung aus beidem in Wasser oder organischen Lösungsmitteln auf die Beschichtung (A) aufträgt und bei Temperaturen von 20°C bis 140°C eindampft, d.h. trocknet.

Gegenstand der vorliegenden Erfindung ist somit auch ein Verfahren zur Herstellung der erfindungsgemäß mit den Schichten (A) und (B) ausgerüsteten Formkörper aus thermoplastischem, aromatischem Polycarbonat, das dadurch gekennzeichnet ist, daß man den Formkörper aus Polycarbonat zusammen mit der Beschichtung (A) coextrudiert und anschließend die Beschichtung (A) mit kolloidalen Lösungen der Kieselsäure oder von anderen Metalloxiden oder von einer Mischung aus beidem in Wasser oder organischen Lösungsmitteln auf die Beschichtung (A) aufträgt und bei Temperaturen von 20°C bis 140°C eindampft.

Die erfindungsgemäß beschichteten Formkörper aus thermoplastischen, aromatischen Polycarbonaten haben infolge der Beschichtung (A) einen starken Schutz gegen die Einwirkung von UV-Strahlen und gegebenenfalls infolge der zusätzlichen Beschichtung (B) eine Oberfläche, die bei Benetzung mit Wasser eine wasserspreitende Wirkung zeigt, also die Bildung von Wassertropfen unterdrückt.

Die Beschichtung (A) kann somit als hochwirksame lichtschützende Beschichtung für Formkörper aus Polycarbonat verwendet werden, sie kann jedoch auch als haftvermittelnde Schicht für eine zweite wasserspreitende Schicht (B) aus Kieselsäure, einem anderen Metalloxid oder einer Kombination der beiden verwendet werden.

EP 110 221 beschreibt ein Verfahren zur Beschichtung von Polycarbonat-Tafeln mit Kunststoffschichten, die mindestens 3 Gew.-% eines UV-Absorbers, z.B. 2-Hydroxy-4-n-octoxi-benzophenon enthalten, mittels Einschicht-Coextrusion. Für den Praxisbetrieb war die Flüchtigkeit der damals zur Verfügung stehenden UV-Absorber jedoch zu hoch.

DE-OS 1 694 273 beschreibt Polycarbonat-Formkörper mit einem Überzug aus Polycarbonat, der aus organischem Lösungsmittel aufgetragen wird. Die Überzüge können 0,01 bis 20 Gew.-%, bezogen auf Gesamtgewicht der Lösung Hydroxybenzophenon-Derivate enthalten. Auch die hier genannten Hydroxybenzophenone sind zu flüchtig als daß sie für eine Einschicht-Coextrusion geeignet wären und führen daher infolge von Ausdampfungsverlusten zu Unregelmäßigkeiten in der Formteiloberfläche und Verstopfungen der Kalibratordüsen.

Infolge des Fehlens geeigneter schwerflüchtiger UV-Absorber wurde daher in der Praxis mit größerem Aufwand eine zweite, UV-Absorber-freie Deckschicht coextrudiert, wodurch auch die Verwendung der damals bekannten flüchtigen UV-Absorber in der darunter liegenden Schicht möglich wurde. Siehe hierzu DE 3 244 953.

Es hat daher in der Vergangenheit viele Versuche zur Entwicklung von schwerflüchtigen und gleichzeitig hochwirksamen UV-Absorbern gegeben: So beschreibt EP 141 140 polymere UV-Absorber mit geringster Flüchtigkeit, die jedoch noch Nachteile in der Lichtschutzwirkung gegenüber den sonst in Polycarbonat üblichen Benztriazolsystemen aufwiesen.

Ferner beschreibt EP 0 320 632 (Le A 25 600) die Verwendung spezieller dimerer Benztriazolderivate zur Einschicht-Coextrusion von Polycarbonat. Vorteile dieser Verbindungen sind die gute Verträglichkeit verbunden mit einer hohen Effektivität. Diese Verbindungen erlaubten in der Praxis erstmals die Herstellung optimal lichtgeschützter PC-Platten nach dem Einschicht-Coextrusionsverfahren. Nachteilig ist jedoch die aufwendige Herstellung dieser Verbindungen, die den Produktionsprozeß verteuert.

Überraschenderweise wurde gefunden, daß die erfindungsgemäßen Verbindungen (I) den bekannten Systemen hinsichtlich Lichtschutzwirkung überlegen sind und sich für die Einschicht-Coextrusion hervorragend eignen.

US-PS 4 576 864 beschreibt ein Verfahren zur wasserspreitenden Beschichtung von Kunststoffen, das dadurch gekennzeichnet ist, daß man ein polares, nicht wasserquellbares Polymer auf ein thermoplastisches Substrat aufträgt und anschließend mit einer Metallsol (Kieselsol-)-Lösung beschichtet und eintrocknet. Dieses Verfahren hat gegenüber dem Verfahren der vorliegenden Erfindung den Nachteil, daß der Beschichtungsvorgang zweistufig erfolgt und sich daher nur aufwendig in einen kontinuierlichen Produktionsprozeß integrieren läßt.

EP 378 855 beschreibt ein Verfahren zur wasserspreitenden Ausrüstung von Kunststoffen, das dadurch gekennzeichnet ist, daß man ein Metallsol (Kieselsol-) aus organischem Lösungsmittel auf einen Kunststoff aufträgt und eindampft. Das dort beschriebene Verfahren hat gegenüber dem erfindungsgemäßen Verfahren den Nachteil der Verwendung von organischen Lösungsmitteln, die bei empfindlichen Kunststoffen Spannungsrisse auslösen können.

EP 493 781 (Le A 28 139) beschreibt Polyether-Block-Polycarbonate zur wasserspreitenden Beschichtung von Kunststoffen. Aufgrund des thermoplastischen Charakters des Polyether-Block-Polycarbonats eignet sich dieses zwar prinzipiell zu kontinuierlichen Extrusion auf Kunststoffmaterialien, die thermische und hydrolytische Stabilität erweist sich jedoch hierfür in der Praxis zu gering.

Bevorzugte Verbindungen der Formel (I) sind beispielsweise

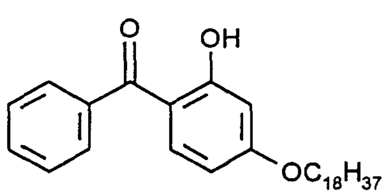

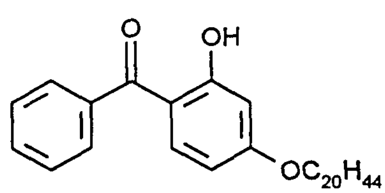

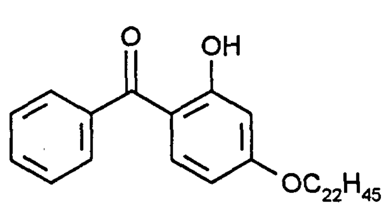

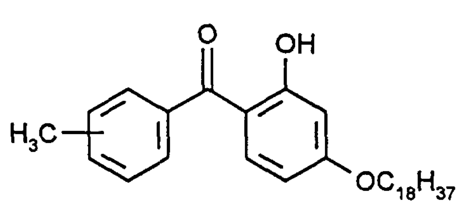

und

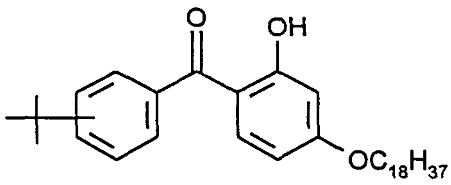 und 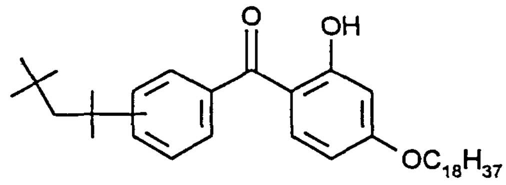 ;

besonders bevorzugt werden

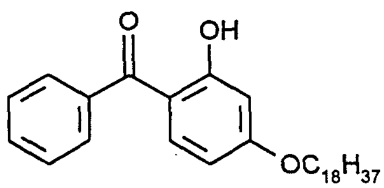 , 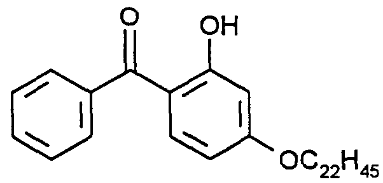

und

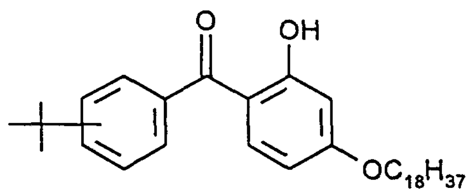 .

Derartige Hydroxybenzophenon-Derivate können auf bekannten Wegen hergestellt werden. Die Herstellung ist beispielsweise in DE-OS 1 768 599 beschrieben.

Thermoplastische, aromatische Polycarbonate im Sinne der vorliegenden Erfindung sind sowohl Homopolycarbonate als auch Copolycarbonate; die Polycarbonate können in bekannter Weise linear oder verzweigt sein.

Die Herstellung dieser erfindungsgemäß zu beschichtenden Ppolycarbonate erfolgt in bekannter Weise aus Diphenolen, Kohlensäurederivaten, gegebenenfalls Kettenabbrechern und gegebenenfalls Verzweigern.

Einzelheiten der Herstellung von Polycarbonaten sind in vielen Patentschriften seit etwa 40 Jahren niedergelegt. Beispielhaft sei hier nur auf "Schnell", Chemistry and Physics of Polycarbonates", Polymer Reviews, Volume 9, Interscience Publishers, New York, London, Sydney 1964, auf D. Freitag, U. Grigo, P.R. Müller, H. Nonvertue', BAYER AG, "Polycarbonates" in Encyclopedia of Polymer Science and Engineering, Volume 11, Second Edition, 1988, Seiten 648-718 und schließlich auf Dres. U. Grigo, K. Kirchner und P.R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299 verwiesen.

Für die Herstellung der erfindungsgemäß zu beschichtenden Polycarbonate geeignete Diphenole sind beispielsweise Hydrochinon, Resorcin, Dihydroxydiphenyle, Bis-(hydroxyphenyl)-alkane, Bis(hydroxyphenyl)-cycloalkane, Bis(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, $\alpha,\alpha'$-Bis-(hydroxyphenyl)-diisopropylbenzole, sowie deren kernalkylierte und kernhalogenierte Verbindungen.

Bevorzugte Diphenole sind 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-p-diisopropylbenzol, 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-p-diisopropylbenzol, 2,2-Bis-(3,5-dichlor-4-hydroxyphenyl)-propan, 2,2-Bis-(3,5-dibrom-4-hydroxyphenyl)-propan und 1,1-Bis-(4-hydroxyphenyl)-3,3,5-trimethylcyclohexan.

Besonders bevorzugte Diphenole sind 2,2-Bis-(4-hydroxyphenyl)-propan, 2,2-Bis(3,5-dimethyl-4-hydroxyphenyl)-propan, 2,2-Bis-(3,5-dichlor-4-hydroxyphenyl)-propan, 2,2-Bis-(3,5-dibrom-4-hydroxyphenyl)-propan, 1,1-Bis-(4-hydroxyphenyl)-cyclohexan und 1,1-Bis-(4-hydroxyphenyl)-3,3,5-trimethylcyclohexan.

Diese und weitere geeignete Diphenole sind z.B. in den US-PS 3 028 635, 2 999 835, 3 148 172, 2 991 273,

3 271 367, 4 982 014 und 2 999 846, in den deutschen Offenlegungsschriften 1 570 703, 2 063 050, 2 036 052, 2 211 956 und 3 832 396, der französischen Patentschrift 1 561 518, in der Monographie "H. Schnell, Chemistry and Physics of Polycarbonates, Interscience Publishers, New York 1964" sowie in den japanischen Offenlegungsschriften 62039/1986, 62040/1986 und 105550/1986 beschrieben.

Im Falle der Homopolycarbonate ist nur ein Diphenol eingesetzt, im Falle der Copolycarbonate sind mehrere Diphenole eingesetzt.

Geeignete Kohlensäurederivate sind beispielsweise Phosgen oder Diphenylcarbonat.

Geeignete Kettenabbrecher sind sowohl Monophenole als auch Monocarbonsäuren. Geeignete Monophenole sind Phenol selbst, Alkylphenole wie Kresole, p-tert.-Butylphenol, p-n-Octylphenol, p-iso-Octylphenol, p-n-Nonylphenol und p-iso-Nonylphenol, Halogenphenole wie p-Chlorphenol, 2,4-Dichlorphenol, p-Bromphenol und 2,4,6-Tribromphenol.

Geeignete Monocarbonsäuren sind Benzoesäure, Alkylbenzoesäuren und Halogenbenzoesäuren.

Bevorzugte Kettenabbrecher sind die Phenole der Formel (IV)

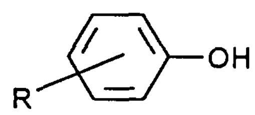

(IV)

worin

R ein verzweigter oder unverzweigter $C_8$- und/oder $C_9$-Alkylrest ist.

Die Menge an einzusetzendem Kettenabbrecher beträgt 0,1 Mol-% bis 5 Mol-%, bezogen auf Mole an jeweils eingesetzten Diphenolen. Die Zugabe der Kettenabbrecher kann vor, während oder nach der Phosgenierung erfolgen.

Geeignete Verzweiger sind die in der Polycarbonatchemie bekannten tri- oder mehr als trifunktionellen Verbindungen, insbesondere solche mit drei oder mehr als drei phenolischen OH-Gruppen.

Geeignete Verzweiger sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Hexa-(4-(4-hydroxyphenyl-isopropyl)-phenyl)-orthoterephthalsäureester, Tetra-(4-hydroxyphenyl)-methan, Tetra-(4-(4-hydroxyphenyl-isopropyl)-phenoxy)-methan und 1,4-Bis-(4',4"-dihydroxytriphenyl)-methyl)-benzol sowie 2,4-Dihydroxybenzoesäure, Trimesinsäure, Cyanurchlorid und 3,3-Bis-(3-methyl-4-hydroxyphenyl)-2-oxo-2,3-dihydroindol.

Die Menge der gegebenenfalls einzusetzenden Verzweiger beträgt 0,05 Mol-% bis 2 Mol-%, bezogen wiederum auf Mole an jeweils eingesetzten Diphenolen.

Die Verzweiger können entweder mit den Diphenolen und den Kettenabbrechern in der wäßrig alkalischen Phase vorgelegt werden, oder in einem organischen Lösungsmittel gelöst vor der Phosgenierung zugegeben werden. Im Falle des Umesterungsverfahrens werden die Verzweiger zusammen mit den Diphenolen eingesetzt.

Alle diese Maßnahmen zur Herstellung der Ausgangspolycarbonate sind dem Fachmann geläufig.

Die Molekulargewichte $\overline{M}w$ (Gewichtsmittelmolekulargewichte, ermittelt durch Gelchromatographie der erfindungsgemäß zu beschichtenden thermoplastischen, aromatischen Polycarbonate liegen zwischen 10.000 und 100.000, vorzugsweise zwischen 15.000 und 50.000.

Die Herstellung von beliebigen Formkörper aus diesen Polycarbonaten ist bekannt.

Die für die Beschichtung (A) geeigneten thermoplastischen, aromatischen Polycarbonate entsprechen denjenigen, die vorstehend für die zu beschichtenden Formkörper aus thermoplastischen, aromatischen Polycarbonaten definiert wurden.

Die Einarbeitung der Verbindungen der Formel (I) in die für die Beschichtung (A) vorgesehenen, thermoplastischen, aromatischen Polycarbonate erfolgt vorzugsweise durch Mischen in der Schmelze bei Temperaturen von 220 bis 350°C, sie kann jedoch auch durch Auflösen der Komponenten in Chlorbenzol und/oder Methylenchlorid und gemeinsames Ausdampfen auf dem Ausdampfextruder bei 160 bis 340°C erfolgen.

Die Materialien für die Beschichtung (B) werden hergestellt aus Metalloxidsolen, d.h. wäßrigen, kolloidalen Dispersionen von amorphen Metalloxiden, wie z.B. Kieselsäure, mit Teilchengrößen zwischen 1 und 100 nm. Beispiele für andere geeignete Metalloxide sind die Oxide von Zink, Aluminium, Zirkon, Chrom und Zinn. Ganz besonders bevorzugt werden Kieselsäure und Aluminiumoxid oder deren Mischungen.

Die Metalloxidsole sind durch oberflächliche Ladungen anionisch oder kationisch stabilisiert. Es handelt sich in der Regel um wäßrige kolloidale Lösungen; genauso können jedoch auch kolloidale Lösungen von beispielsweise Kieselsäure in organischen Lösungsmitteln wie Isopropanol, Ethylenglykol, Propylenglykol, Aceton, Diacetonalkohol, Methylethylketon, Propylenglykolmethylether, Dimethylformaldehyd etc. eingesetzt werden.

Beispiele für geeignete Kieselsole sind anionische Kieselsole mit einer spezifischen Oberfläche von 100 bis 300 $m^2$/g und kationische, mit Aluminiumsalzen modifizierte Kieselsole mit spezifischen Oberflächen von 100 bis 300 $m^2$/g. Derartige Kieselsole sind als Handelsprodukte (z.B. Levasil® der Fa. Bayer) erhältlich.

Die Feststoffgehalte der Metalloxidsole liegen zwischen 0,1 Gew.-% und 5 Gew.-%.

In dieser verdünnten Form werden die Metalloxidsole auf die Beschichtung (A) aufgetragen.

Zur besseren Benetzung empfiehlt sich die Zugabe geeigneter Tenside. Ein Beispiel für ein solches geeignetes Tensid ist ein Addukt von 7 mol Ethylenoxid an 1 mol Leinölfettsäure. Das Metallsol wird aus dieser verdünnten, Tensid-haltigen Lösung so aufgetragen, daß die resultierende Beschichtung möglichst dünn und zusammenhängend erscheint. Die Metallsole können mit bestehenden Auftragstechniken aufgebracht werden, insbesondere durch Rakeln, Tauchen, Gießen etc. Der Trocknungsprozeß kann bei Raumtemperatur oder bei erhöhter Temperatur (bis ca. 140°C) erfolgen. Bevorzugt wird bei 70 bis 120°C getrocknet.

Beliebige Formkörper aus Polycarbonaten können mit den erfindungsgemäßen Beschichtungen ausgerüstet werden. Beispiele hierfür sind Stegdoppelplatten und Massivplatten für Verglasungen, insbesondere im Gewächshausbau, Wintergärten, Garagendächer, Industrieverglasung etc., Sonnenbrillen, Visiere für Motorradhelme etc. Die Herstellung dieser Formkörper an sich ist bekannt.

Diese Formkörper können sowohl nur mit der Beschichtung (A) als auch zusätzlich mit der Beschichtung (B) versehen werden.

Besonders geeignete Formteile sind coextrusierte Hohlkammerplatten mit einer 1 µm bis 50 µm dicken Beschichtung (A), die durch Coextrusion bei Temperaturen zwischen 220°C und 320°C erhalten werden. Bezüglich Hohlkammerplatten bzw. Doppelstegplatten siehe beispielsweise EP-A 0 054 856.

**Beispiel 1**

Granulatförmiges Bisphenol-A-Polycarbonat (Eta-rel = 1,315, gemessen mit 0,5 g/100 ml Methylenchlorid bei Raumtemperatur) wird mit 10 Gew.-% 2-Hydroxy-4-octadecyloxibenzophenon gemischt und bei 300°C mit einem Doppelwellenextruder zu einem homogenen Granulat verarbeitet.

Anschließend wird eine Hohlkammerplatte bei 290°C hergestellt, wobei das obengenannte Granulat zur Herstellung einer 50 µm dicken Deckschicht und ein verzweigtes aromatisches Polycarbonat (Eta-rel = 1,315, gemessen mit 0,5 g/100 ml Methylenchlorid bei RT) als Basismaterial verwendet wird.

**Vergleich A**

Herstellung analog Beispiel 1, jedoch unter Einsatz von 10 Gew.-% p-Methoxybenzyliden-malonsäure-neopentylglykol-polyester (Beispiel B 1 der EP 141 140).

**Vergleich B**

Herstellung analog Beispiel 1, jedoch unter Einsatz von 10 Gew.-% eines dimeren Benztriazols Methylen-bis-(2-hydroxy-5-tert.-octyl-phenyl-benztriazol) gemäß EP 0 320 632 (Verbindung (I)).

**Prüfung der Bewitterungsstabilität:**

Die so hergestellten Doppelstegplatten werden in einem Xenon-Weather-o-meter mit Feucht/Trockenzyklus (102:18) bewittert. Anschließend werden Vergilbung (Yellowness-Index) und Transmission gemessen:

**Yelloness-Index:**

| | 0 h | 1000 h | 2000 h | 3000 h |
|---|---|---|---|---|
| Beispiel 1 | 2,3 | 1,2 | 2,3 | 2,9 |
| Vergleich A | 1,8 | 1,8 | 7,7 | 6,7 |

(fortgesetzt)

| | 0 h | 1000 h | 2000 h | 3000 h |
|---|---|---|---|---|
| Vergleich B | 2,4 | 1,8 | 3,9 | 4,1 |

**Transmission:**

| | 0 h | 1000 h | 2000 h | 3000 h |
|---|---|---|---|---|
| Beispiel 1 | 80,6 | 81,0 | 80,1 | 79,4 |
| Vergleich A | 80,1 | 80,9 | 77,7 | 77,7 |
| Vergleich B | 80,2 | 80,4 | 78,7 | 79,3 |

**Beispiel 2** Wasserspreitende Beschichtung

Eine 3%ige Lösung eines Kieselsols mit der spezifischen Oberfläche von 300 $m^2/g$ und einer mittleren Teilchengröße von 7 bis 8 nm (Levasil® 300, Bayer AG) die zusätzlich 0,15 % eines nichtionischen Tensids (Addukt von 7 mol Ethylenoxid an Leinölfettsäure) enthielt, wurde auf die Hohlkammerplatte des Beispiels 1 aufgesprüht und 2 bis 3 Minuten bei Raumtemperatur angetrocknet und anschließend noch einmal 10 Minuten bei 80°C getrocknet.

Die Platte wurde anschließend in einem Winkel von 60°C mit der beschichteten Seite nach unten an der Decke eines Modellgewächshauses befestigt, so daß die wasserspreitende Wirkung durch Beobachtung der Tröpchenbildung verglichen werden konnte. In dem Modellgewächshaus wurde mittels einer Heizquelle Wasser verdampft, so daß sich eine Gleichgewichtstemperatur von 50°C und 100 % Luftfeuchtigkeit einstellte.

Die Platte wurde 6 Stunden unter diesen Bedingungen belassen und anschließend in einem trockenen Heizschrank 4 Stunden bei 40°C erhitzt. Anschließend wiederholte man die Prozedur im Modellgewächshaus und im Heizschrank immer abwechselnd, solange bis der wasserspreitende Effekt verschwand (ersichtlich an der Tropfenbildung auf der Platte).

| Ergebnis: | |
|---|---|
| | Lebensdauer der Beschichtung (in Zyklen) |
| ohne haftvermittelnde Schicht (A)<br>Beschichtung gemaß Beispiel 1 | 13<br>> 120 |

**Patentansprüche**

1. Beschichtete Formkörper aus thermoplastischen, aromatischen Polycarbonaten, **dadurch gekennzeichnet, daß** die Beschichtung (A) selbst aus einem thermoplastischen, aromatischen Polycarbonat mit einer Dicke von 1 µm bis 200 µm besteht, welches 4 Gew.-% bis 20 Gew.-% einer Verbindung der Formel (I) enthält

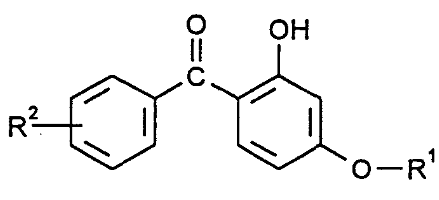

(I)

worin $R^1$ $C_{18}$-$C_{30}$-Alkyl und $R^2$ H oder $C_1$-$C_{12}$-Alkyl sind.

2. Verfahren zur Herstellung der beschichteten Formkörper des Anspruchs 1, **dadurch gekennzeichnet, daß** man Formkörper und Beschichtung (A) gemeinsam durch Coextrusion herstellt.

**3.** Beschichtete Formkörper gemäß Anspruch 1, wobei die Formkörper auf der Beschichtung (A) noch eine zweite Beschichtung (B) aus Kieselsäure, einem anderen Metalloxid oder einer Mischung aus beidem mit einer Dicke von 0,01 µm bis 20 µm haben.

**4.** Verfahren zur Herstellung der beschichteten Formkörper des Anspruchs 3, **dadurch gekennzeichnet, daß** man den Formkörper aus Polycarbonat zusammen mit der Beschichtung (A) coextrudiert und anschließend die Beschichtung (A) mit kolloidalen Lösungen der Kieselsäure oder von anderen Metalloxiden oder von einer Mischung aus beiden in Wasser oder organischen Lösungsmitteln auf die Beschichtung (A) aufträgt und bei Temperaturen von 20°C bis 140°C eindampft.

**Claims**

**1.** Coated mouldings of thermoplastic, aromatic, polycarbonates, **characterized in that** coating (A) itself consists of a thermoplastic, aromatic polycarbonate with a thickness of 1 µm to 200 µm which contains 4% by weight to 20% by weight of a compound corresponding to formula (I):

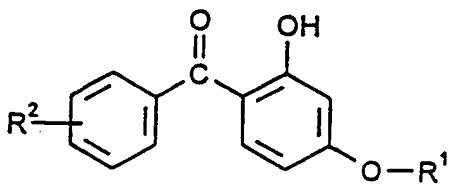

(I)

in which $R^1$ is $C_{18\text{-}30}$ alkyl and $R^2$ is H or $C_{1\text{-}12}$ alkyl.

**2.** Process for the production of the coated mouldings of claim 1, **characterized in that** the moulding and coating (A) are produced together by coextrusion.

**3.** Coated mouldings according to claim 1, the mouldings having on coating (A) a second coating (B) of silica, another metal oxide or a mixture of both with a thickness of 0.01 µm to 20 µm.

**4.** Process for the production of the coated mouldings of claim 3, **characterized in that** the moulding of polycarbonate is coextruded together with coating (A), after which coating (A) is applied to coating (A) using colloidal solutions of silica or of other metal oxides or of a mixture of both in water or organic solvents and then concentrated by evaporation at temperatures of 20°C to 140°C.

**Revendications**

**1.** Corps façonnés revêtus en polycarbonates aromatiques thermoplastiques, **caractérisés en ce que** le revêtement (A) consiste lui-même en un polycarbonate aromatique thermoplastique à une épaisseur de 1 à 200 µm qui contient 4 % à 20 % en poids d'un composé de formule (I)

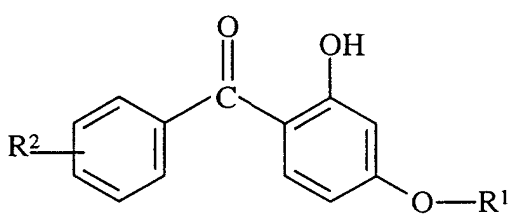

(I)

dans laquelle $R^1$ représente un groupe alkyle en $C_{18}$-$C_{30}$ et $R^2$ représente H ou un groupe alkyle en $C_1$-$C_{12}$.

**2.** Procédé pour la fabrication des corps façonnés revêtus de la revendication 1, **caractérisé en ce que** l'on fabrique

le corps façonné et le revêtement (A) en même temps par co-extrusion.

3. Corps façonnés revêtus selon la revendication 1, portant encore, sur le revêtement (A), un deuxième revêtement (B) consistant en silice, un autre oxyde métallique ou un mélange de silice et d'un autre oxyde métallique, à une épaisseur de 0,01 à 20 µm.

4. Procédé pour la fabrication des corps façonnés revêtus de la revendication 3, **caractérisé en ce que** l'on forme simultanément le corps façonné en polycarbonate et le revêtement (A) par co-extrusion et on applique ensuite le revêtement (B) à l'aide de solutions colloïdales de silice ou d'autres oxydes métalliques ou d'un mélange de silice et d'un autre oxyde métallique dans l'eau ou des solvants organiques, sur le revêtement (A) après quoi, on évapore à des températures de 20 à 140°C.